# EUROPEAN PATENT APPLICATION

(11) **EP 3 964 065 A2**
(43) Date of publication of application: **09.03.2022**
(21) Application number: 21188958.9
(22) Date of filing: 30.07.2021
(51) Int. Cl.: A01N 43/08, A01N 43/10, A01P 5/00, A01P 7/00

(54) **FUMIGANT COMPOSITION FOR PEST CONTROL**

(30) Priority: 04.09.2020 TW 109130409
(71) Applicant: National Chung Hsing University, Taichung City 402 (TW)
(72) Inventor: Meng, Menghsiao, 408 Taichung City (TW); Dai, Shu-Mei, 402 Taichung City (TW); Leu, Wei-Ming, 407 Taichung City (TW); Lee, Cheng-Cheng, 402 Taichung City (TW); Lin, Ying-Tong, 646 Yunlin County (TW); Huang, Sheng, 723 Tainan City (TW)
(74) Representative: Lang, Christian

(57) **Abstract**

The invention discloses a fumigant composition for pest control comprising a chemical compound represented by formula (I) or/and a pesticidally acceptable reagent. By administering an effective amount of the fumigant composition for pest control disclosed in the invention into a closed space is capable of effectively killing a variety of pests, and will not have a health impact on human and harm to the environment; given an appropriate operation is taken. 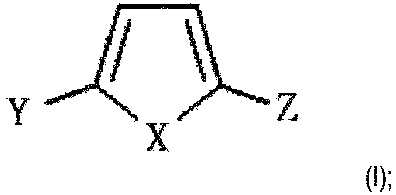 wherein:
X is oxygen or sulfur;
Y is hydrogen or methyl group;
Z is methyl or ethyl group.

## Description

### BACKGROUND OF THE INVENTION

### Field of Invention

The invention relates to a use of a group of chemical compounds for controlling pests, and more particularly to a fumigant composition for pest control.

### Related Art

A pest control fumigant refers to a volatile chemical that can kill pests when it reaches the respiration tract of the pest through either burning or evaporation. In general, an optimum control effect can be achieved when the fumigant is used in a closed space. At present, the commonly used pest control fumigants include phosphine, methyl bromide, sulfuryl fluoride, etc. Although a pest control fumigant can effectively kill pests in a closed space, it may cause harm to off-target organisms or the environment during use.

For example, although methyl bromide, once a leading fumigant, has several advantages such as strong insecticidal efficacy, stable chemical properties, and low price, it is banned, except for customs quarantine, after 2015 under the directive of Montreal Protocol because it is an ozone-depleting substance. Phosphine is a fumigant commonly used to control pests in granary, but it has disadvantages such as extreme toxicity to mammals, high chemical reactivity, and more importantly, the emergence of phosphine-resistant insects. The leak of phosphine from the fumigation space would damage the health of nearby people and animals. Sulfuryl fluoride is a greenhouse gas; therefore, the use of the compound will aggravate the global greenhouse effect.

Given the various adverse effects of current pest control fumigants, it is an urgent task to develop alternative fumigants (or fumigant composition) with characteristics such as low toxicity to humans and being friendly to the atmosphere.

### SUMMARY OF THE INVENTION

A main object of the invention is to provide a fumigant composition capable of effectively killing various pests in an environment. This fumigant composition exerts less toxicity to mammals than the currently used fumigants and does not cause harm to the environment.

Another object of the invention is to provide a fumigant composition for pest control, which can be prepared easily into a suitable dosage/formulation according to use requirements, use occasions or use methods, and is capable of achieving an efficacy of killing pests.

In order to achieve the above-mentioned efficacy, the invention discloses another use of chemicals of formula (I); specifically, the invention discloses a use of the chemical compound of formula (I) for preparing a fumigant composition for pest control.

And the chemical compound of formula (I) is represented as follows: 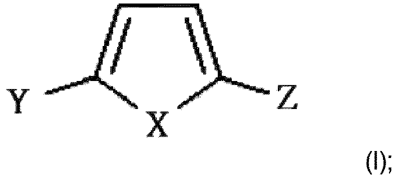 wherein:
X is oxygen or sulfur;
Y is hydrogen or methyl group;
Z is methyl or ethyl group.

By administering a fumigant composition for pest control containing an effective amount of the chemical compound of formula (I) into a closed space is capable of effectively killing pests in the space, wherein the pests are insects, mites or nematodes. For example, the insects could be rice weevil (*Sitophilus oryzae*), German cockroach (*Blattella germanica*), green peach aphid (*Myzus persicae*), brown planthopper (*Nilaparvata lugens*), diamondback moth (*Plutella xylostella*), sweet potato weevil (*Cylas formicarius*), lesser grain borer (*Rhyzopertha dominica*), etc.

Specifically, an administered dosage of the fumigant composition for pest control is no less than 18 mg of the chemical compound of formula (I) per thousand cubic centimeters (1 liter) of space.

In one embodiment of the invention, the chemical compound of formula (I) is 2,5-dimethylfuran, 2,5-dimethylthiophene, 2-methylfuran, 2-methylthiophene, 2-ethylfuran or 2-ethylthiophene.

In one embodiment of the invention, the fumigant composition for pest control further comprises an acceptable reagent usually used in pesticide formulation, such as water, surfactant, dimethyl sulfoxide, or glycerin.

In one embodiment of the invention, the fumigant composition for pest control is a fumigant or an emulsion.

### BRIEF DESCRIPTION OF THE DRAWINGS

FIG. 1 is the results of testing the mortality caused by different doses of 2,5-dimethylfuran through fumigation on German cockroach (*Blattella germanica*), green peach aphid (*Myzus persicae*), brown planthopper (*Nilaparvata lugens*), diamondback moth (*Plutella xylostella*), rice weevil (*Sitophilus oryzae*), lesser grain borer (*Rhyzopertha dominica*), and sweet potato weevil (*Cylas formicarius*);
FIG. 2A is the results of testing the fumigant toxicity of 2,5-dimethylfuran to *Sitophilus oryzae;*
FIG. 2B is the results of testing the fumigant toxicity of 2-methylfuran to *Sitophilus oryzae;*
FIG. 2C is the results of testing the fumigant toxicity of 2-ethylfuran to *Sitophilus oryzae;*
FIG. 2D is the results of testing the fumigant toxicity of 2,5-dimethylthiophene to *Sitophilus oryzae;*
FIG. 2E is the results of testing the fumigant toxicity of 2-methylthiophene to *Sitophilus oryzae;* and
FIG. 2F is the results of testing the fumigant toxicity of 2-ethylthiophene to *Sitophilus oryzae.*

### DETAILED DESCRIPTION OF THE INVENTION

The invention discloses a fumigant composition for pest control comprising at least one chemical compound represented by the following formula (I) as an active ingredient: 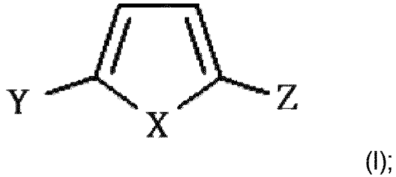 wherein:
X is oxygen or sulfur;
Y is hydrogen or methyl group;
Z is methyl or ethyl group.

The chemical compound represented by formula (I) is a highly volatile liquid. According to the Material Safety Data Sheet provided by the manufactures and publicly accessible chemical information websites, such as PubChem, the active ingredient disclosed in the invention is a low-toxic substance compared to phosphine, which means that the active ingredient is relatively safer to the human body or other mammals, and there is no known hazard to the environment.

Specifically, the chemical compound represented by formula (I) is 2,5-dimethylfuran, 2,5-dimethylthiophene, 2-methylfuran, 2-methylthiophene, 2-ethylfuran or 2-ethylthiophene, as shown in table 1 below.

**Table 1: structural formula of each of the chemical compounds**

| Chemical name | Structural formula | Molecular formula |
|---|---|---|
| 2,5-dimethylfuran | 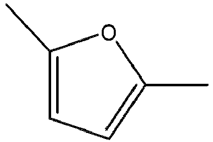 | C₆H₈O |
| 2,5-dimethylthiophene | 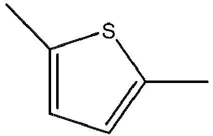 | C₆H₈O |
| 2-methylfuran | 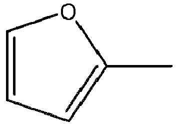 | C₅H₆O |
| 2-methylthiophene | 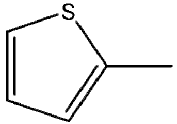 | C₅H₆S |
| 2-ethylfuran | 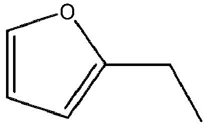 | C₆H₈O |
| 2-ethylthiophene | 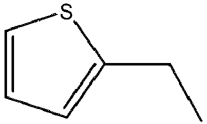 | C₆H₈O |

Furthermore, in order to increase the ways of use and adapt to different environmental conditions, the fumigant composition for pest control disclosed in the invention further comprises a pesticidally acceptable reagent, such as an organic chemical substance or a solvent. For example, the pesticidally acceptable reagent is dimethyl sulfoxide, glycerin, surfactant, or water, which can be formulated with the chemical compound of formula (I) disclosed in the invention according to a predetermined ratio and made into an emulsion.

The chemical compound of formula (I) disclosed in the invention has different median lethal concentrations (LC₅₀) for pest insects. Therefore, a dosage of the fumigant composition for pest control disclosed in the invention will also vary with factors of place of use, method of use, and object of use. Taking rice weevil (*Sitophilus oryzae*) as an example, the LC₅₀ of 2,5-dimethylfuran is 29-43 mg/dm³/2 hours; the LC₅₀ of 2,5-dimethylthiophene is 40-90 mg/dm³/2 hours; the LC₅₀ of 2-ethylfuran is 66-78 mg/dm³/2 hours; the LC₅₀ of 2-ethylthiophene is 10-13 mg/dm³/2 hours; the LC₅₀ of 2-methylfuran is 127-155 mg/dm³/2 hours; and the LC₅₀ of 2-methylthiophene is 21-30 mg/dm³/2 hours. The effective dosage or LC₅₀ of the chemical compound of formula (I) in the fumigant composition for pest control disclosed in the invention will vary with the application condition, the reagent used in combination, or the corresponding pests. However, variation of the effective dosage or LC₅₀ of the active ingredient can be achieved by a person having ordinary skill in the art to which the invention pertains through the disclosure of the invention, and therefore shall fall within the protected scope of the invention.

Further, by administering an effective amount of the fumigant composition for pest control into a closed space is capable of killing a variety of pests in a short time. The pests include mites, nematodes, and insects; and the insects include, but not limited to, rice weevil (*Sitophilus oryzae*), sweet potato weevil (*Cylas formicarius*), German cockroach (*Blattella germanica*), and diamondback moth (*Plutella xylostella*)*.*

For example, using the fumigant composition for pest control disclosed in the invention comprising more than 18 mg of the chemical compound of formula (I) in every thousand cubic centimeters of space (1 liter) is capable of killing a variety of pests within 2 hours.

Hereinafter, in order to further illustrate the technical features and efficacies of the invention, several examples in conjunction with the figures will be used for detailed description as follows.

The poisoning ability index used in the following examples is the internationally commonly used median lethal concentration (LC₅₀), which refers to a dosage required to kill 50% of a group of tested insects. The main test method is to include a number of tested insect (adults or larvae) and the examined chemical at a wide range of dosage in a 1-liter airtight transparent containers for a period of time. Afterward, the airtight containers were opened for ventilation, and the dead insects in the containers were counted. The linear regression between the mortality, expressed as probability unit, and the log dosage was analyzed using the software Priprobit v1.63, from which the value of LC₅₀ could be obtained.

### Example 1: Fumigant toxicity test (1)

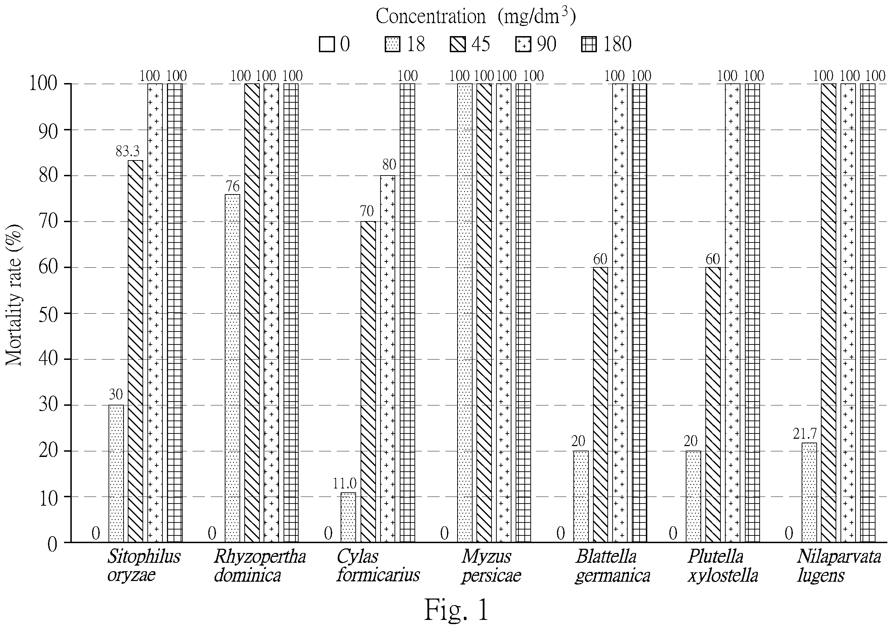

Take several 1-liter airtight transparent containers marked with different doses of 2,5-dimethylfuran, then put 30 insects into each of the transparent containers and add 2,5-dimethylfuran with marked doses (0, 18, 45, 90, 180 mg/dm³), respectively, into each of the transparent containers. Place the containers at room temperature (∼24°C) for 2 hours, and then quantitate the dead insects in each of the transparent containers. The results are shown in FIG. 1. Wherein, the insects used include German cockroach (*Blattella germinica*), green peach aphid (*Myzus persicae*), brown planthopper (*Nilaparvata lugens*), diamondback moth (*Plutella xylostella*), rice weevil (*Sitophilus oryzae*), lesser grain borer (*Rhyzopertha dominica*), and sweet potato weevil (*Cylas formicarius*)*.*

From the results shown in FIG. 1, it can be known that 2,5-dimethylfuran indeed has fumigant toxicity to insects belonging to different orders (including Hemiptera, Lepidoptera, Blattodea, Coleoptera). Further, an administered dosage of 18 mg/dm³ is enough to kill all the tested individuals of lesser grain borer (*Rhyzopertha dominica*) and green peach aphid (*Myzus persicae*); on the other hand, an administered dosage of 90 mg/dm³ is required to kill all the tested individuals of German cockroach (*Blattella germanica*), brown planthopper (*Nilaparvata lugens*), diamondback moth (*Plutella xylostella*), and rice weevil (*Sitophilus oryzae*)*.*

The results shown in FIG. 1 indicate that 2,5-dimethylfuran disclosed in the invention is an effective fumigant that can be used to kill a variety of pest insects.

### Example 2: fumigant toxicity test (2)

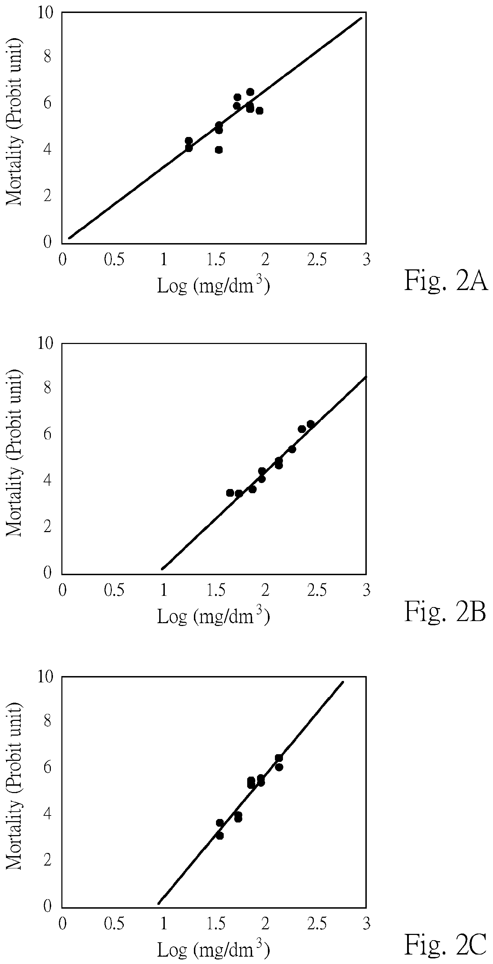

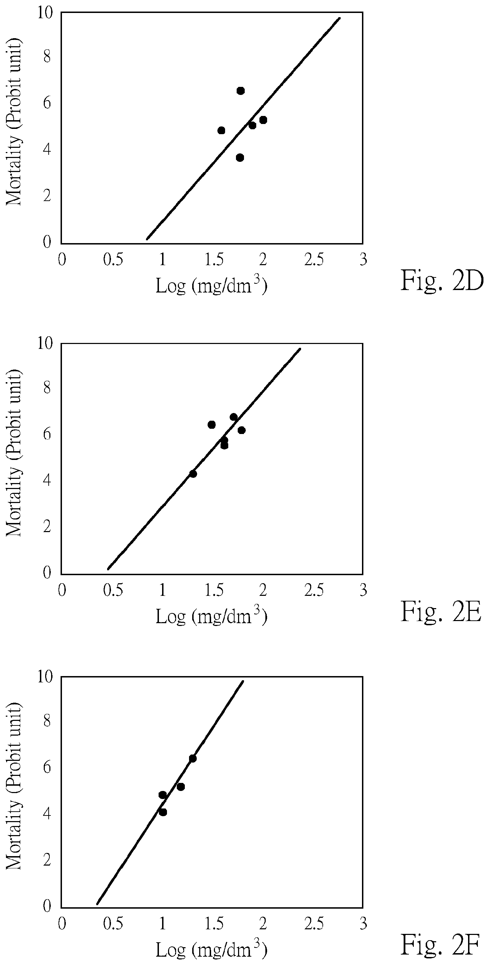

Put 30 adult insects of rice weevil (*Sitophilus oryzae*) into each of a group of 1-liter transparent containers, on which the name of tested chemical and the predetermined dosage are marked. Wherein, the chemicals to be tested include 2,5-dimethylfuran, 2,5-dimethylthiophene, 2-methylfuran, 2-methylthiophene, 2-ethylfuran and 2-ethylthiophene. The airtight containers, which contain the insect and chemical, are left at room temperature of about 24°C for 2 hours. Afterward, the containers are opened for ventilation, and the dead rice weevils (*Sitophilus oryzae*) in each of the containers are counted. The linear regression between mortality and log dosage is analyzed using the software Priprobit v1.63, from which the lethal concentrations 50% (LC₅₀) and 95% (LC₉₅) are calculated. The results are shown in FIG. 2 and table 2 below.

From the results in FIG. 2 and table 2, it can be known that 2,5-dimethylfuran and its analogs, including 2,5-dimethylthiophene, 2-methylfuran, 2-methylthiophene, 2-ethylfuran and 2-ethylthiophene, all have an effectively killing effect on rice weevil (*Sitophilus oryzae*).

**Table 2: Lethal concentration 50% (LC₅₀) and 95% (LC₉₅) of the different chemical compounds toward rice weevil (Sitophilus oryzae)**

| Chemicals | Number of tested insect | LC₅₀ [95% CI] (mg/dm³) | LC₉₅ [95% CI] (mg/dm³) |
|---|---|---|---|
| 2-methylfuran | 420 | 140.1 [127.7-154.6] | 329.7 [274.3-434.6] |
| 2-ethylfuran | 420 | 72.1 [67.0-77.6] | 146.5 [128.1-177.2] |
| 2,5-dimethylfuran | 630 | 36.3 [29.3-42.7] | 111.6 [89.6-157.7] |
| 2-methylthiophene | 420 | 25.8 [21.7-29.5] | 54.6 [45.9-72.5] |
| 2-ethylthiophene | 420 | 11.7 [10.6-12.9] | 20.6 [18.2-25.1] |
| 2,5-dimethylthiophene | 420 | 63.8 [40.4-89.2] | 135.3 [94.4-830.7] |

Based on the combined results of example 1 and example 2, it can be known that 2,5-dimethylfuran, 2,5-dimethylthiophene, 2-methylfuran, 2-methylthiophene, 2-ethylfuran and 2-ethylthiophene have a similar abilities to kill insects, which is sufficient to prove that the chemical compound represented by formula (I) disclosed in the invention has the ability to kill insects with extensive effects, and can be used as the active ingredient of the fumigant composition for pest control.

It is to be understood that the above description is only the embodiments and examples of the invention and is not used to limit the present invention, and changes in accordance with the concepts of the present invention may be made without departing from the spirit of the present invention. For example, the equivalent effects produced by various transformations, variations, modifications and applications made to the configurations or arrangements shall still fall within the scope covered by the appended claims of the present invention.

## Claims

1. A use of a chemical compound of formula (I) for preparing a fumigant composition for pest control: 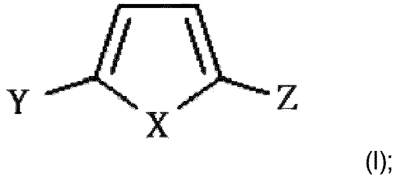 wherein:
X is oxygen or sulfur;
Y is hydrogen or methyl group;
Z is methyl or ethyl group.

2. The use as claimed in claim 1, wherein the chemical compound of formula (I) is 2,5-dimethylfuran, 2,5-dimethylthiophene, 2-methylfuran, 2-methylthiophene, 2-ethylfuran or 2-ethylthiophene.

3. The use as claimed in claim 1 or 2, wherein the fumigant composition for pest control further comprises a pesticidally acceptable reagent.

4. The use as claimed in claim 1 or 2, wherein the fumigant composition for pest control is a fumigant.

5. The use as claimed in claim 1 or 2, wherein the fumigant composition for pest control is an emulsion.

6. The use as claimed in claim 1 or 2, wherein the fumigant composition for pest control is used to kill pests, and the pests are selected from a group consisting of insects, mites and nematodes.

7. The use as claimed in claim 1 or 2, wherein an administered dosage of the fumigant composition for pest control is more than 18 mg of the chemical compound of formula (I) per thousand cubic centimeters of space.
